# EUROPÄISCHE PATENTANMELDUNG

(11) **EP 4 585 539 A1**
(43) Veröffentlichungstag der Anmeldung: **16.07.2025**
(21) Anmeldenummer: 25150483.3
(22) Anmeldetag: 07.01.2025
(51) Int. Cl.: B65G 21/20, B65B 59/04, B65B 59/00, B65G 21/10, B65G 37/00, B65G 21/12

(54) **TRANSPORTSTRECKE ZUR BEFÖRDERUNG VON STÜCKGÜTERN UND VERFAHREN ZUM MODIFIZIEREN EINER SOLCHEN TRANSPORTSTRECKE**

(30) Priorität: 11.01.2024 DE 102024100801
(71) Anmelder: Krones Aktiengesellschaft, 93073 Neutraubling (DE)
(72) Erfinder: SPINDLER, Herbert, 93073 Neutraubling (DE); WERNER, Jürgen, 93073 Neutraubling (DE); WIMMER, Thomas, 93073 Neutraubling (DE); WITTMANN, Stephan, 93073 Neutraubling (DE)
(74) Vertreter: Benninger Patentanwaltskanzlei

(57) **Zusammenfassung**

Es ist ein Verfahren zum Modifizieren einer Transportstrecke (10) mit mindestens einer Horizontalfördereinrichtung (12) offenbart, die für wenigstens zwei unterschiedliche Betriebsmodi (M1, M2, M3) umgerüstet werden kann.

Die Horizontalfördereinrichtung (12) stellt in einem ersten Betriebsmodus (M1) für einen Transport von Stückgütern (16) oder Verpackungseinheiten einer ersten Größe oder eines ersten Typs eine sich in eine Förderrichtung (18) bewegende Auflageebene (14) zur Verfügung, die durch mindestens zwei parallele und voneinander beabstandete Auflagebereiche (20) zur Abstützung und zur Beförderung der Stückgüter (16) oder Verpackungseinheiten der ersten Größe oder des ersten Typs gebildet ist.

In einen Zwischenraum (44) zwischen den mindestens zwei parallelen und voneinander beabstandeten Auflagebereichen (20) ist in einem zweiten Betriebsmodus (M2) der Horizontalfördereinrichtung (12) für einen Transport von Stückgütern (16) oder Verpackungseinheiten einer zweiten Größe oder eines zweiten Typs eine lösbare Stützleiste (46) eingesetzt, die sich in etwa auf einem Höhenniveau der sich in Förderrichtung (18) bewegenden Auflageebene (14) befindet.

Es ist außerdem eine solche Transportstrecke (10) offenbart, deren Horizontalfördereinrichtung (12) in mindestens zwei Betriebsmodi betreibbar ist.

## Beschreibung

Die vorliegende Erfindung betrifft eine Transportstrecke mit mindestens einer Horizontalfördereinrichtung, die zur Beförderung von Stückgütern vorgesehen ist. Zudem betrifft die vorliegende Erfindung ein Verfahren zum Modifizieren einer Transportstrecke mit mindestens einer Horizontalfördereinrichtung, die für wenigstens zwei unterschiedliche Betriebsmodi umgerüstet werden kann.

Um Artikel wie bspw. Getränkebehälter zu verarbeiten, zusammenzustellen, zu gruppieren und/oder zu verpacken, werden unterschiedliche Verpackungsarten eingesetzt. Da bspw. PET-Behälter, wie sie häufig als Getränkebehälter eingesetzt werden, relativ geringe Wandstärken aufweisen und deshalb auch im befüllten Zustand nicht völlig formstabil sind, werden sie in der Regel mit sekundären Verpackungsmitteln ausgestattet. Derartige Sekundärverpackungen sorgen nicht nur für die Zusammenfassung mehrerer Artikel oder Behälter in einer Verpackungseinheit, sondern stabilisieren in der Regel gleichzeitig diese Zusammenstellungen.

Bei einer häufig eingesetzten Variante solcher Sekundärverpackungen können die Artikel oder Behälter bspw. in gruppierter Anordnung auf einen Kartonbogen gestellt werden, dessen Ränder nach oben gefalzt werden. Auch können Kartonbögen eingesetzt werden, dessen Größe der Grundfläche einer gewünschten Gebindeanordnung entspricht, so dass keine Ränder nach oben zu falzen sind. Wahlweise können diese Gebindeanordnungen oder Verpackungseinheiten anschließend mit Folie umhüllt und diese mittels eines Erwärmungsprozesses geschrumpft werden, um einen stabilen Gebindeverbund zu erhalten, der leicht transportiert und gestapelt werden kann. Eine solche Gebindevariante kann auch als tertiäre Verpackung oder als Tertiärverpackung betrachtet werden.

Bei einer weiteren Gebindevariante, die wahlweise auch als "Shrink-only" bezeichnet werden kann, werden die zusammengestellten Behälter ohne weitere Hilfsmittel mit Folie umhüllt, wonach die Folie durch einen Schrumpfungsprozess fest um die Behälter gespannt wird. Die Formstabilität dieser Gebindevariante wird ausschließlich von der Schrumpffolie gewährleistet. Darüber hinaus sind Umreifungsgebinde (sekundäre Verpackung) bekannt, die wahlweise zusätzlich mit einer Folie (tertiäre Verpackung) umhüllt werden können.

Bekannte Verpackungsmaschinen und deren Fördereinrichtungen sind normalerweise jeweils auf eine bestimmte Art, Größe und/oder Kontur von Fördergütern optimiert. Zudem werden für verschiedene Gebinde- und Verpackungsarten jeweils verschiedene Fördereinrichtungen benötigt. Ein Produktwechsel kann unter Umständen dazu führen, dass bestimmte Fördereinrichtungen nicht mehr eingesetzt werden können, da sie bspw. nicht für den Transport von einzelnen Artikeln oder Behältern bzw. von bestimmten Gebindevarianten geeignet sind.

Außerdem könnten Störungen im Transport der Artikel oder Stückgüter auftreten, wenn die Verpackungsmaschinen auf eine jeweils andere Produktvariante eingestellt sind. Solche Förderprobleme können bspw. schon bei einem Wechsel zwischen verpackten Gütern wie etwa Gebindeeinheiten und losen Gütern wie einzelnen Getränkebehältern o. dgl. auftreten. Solche Förderprobleme können jedoch insbesondere bei einem Wechsel zwischen verschiedenen Varianten von Sekundär- und/oder Tertiärverpackungen auftreten. Manche der zu befördernden Verpackungseinheiten können auf Fördereinrichtungen, die für den Transport von anders gestalteten und/oder anders dimensionierten Gebindeeinheiten vorbereitet sind, in unzureichender Weise oder unter erhöhter Störungsanfälligkeit befördert werden, da die Transportmodule möglicherweise keine ausreichend ebenen Unterlagen bieten können, die einen stabilen Transport von Gegenständen mit zu kleiner Grundfläche oder von besonders schweren Stückgütern ermöglichen.

Das Ziel der vorliegenden Erfindung wird darin gesehen, eine Transportstrecke, insbesondere für eine Verpackungsmaschine oder eine andere Verarbeitungsmaschine zur Verfügung zu stellen, die für unterschiedliche Fördergüter gleichermaßen geeignet und optimiert ist, ohne dass Einschränkungen hinsichtlich der Förderqualität für die jeweils zu befördernden Produkte damit verbunden sind.

Dieses Ziel wird mit dem Gegenstand der unabhängigen Ansprüche erreicht. Merkmale vorteilhafter Weiterbildungen der Erfindung ergeben sich aus den jeweiligen abhängigen Ansprüchen.

Zur Erreichung des genannten Ziels schlägt die vorliegende Erfindung eine Transportstrecke mit mindestens einer Horizontalfördereinrichtung vor, die für einen Transport von Stückgütern eine sich in eine Förderrichtung bewegende Auflageebene zur Verfügung stellt, die durch mindestens zwei parallele und voneinander beabstandete Auflagebereiche zur Abstützung und zur Beförderung der Stückgüter oder Verpackungseinheiten gebildet ist. Außerdem schlägt die Erfindung vor, dass in einen Zwischenraum zwischen den mindestens zwei parallelen und voneinander beabstandeten Auflagebereichen eine lösbare Stützleiste einsetzbar ist, die sich in etwa auf einem Höhenniveau der sich in Förderrichtung bewegenden Auflageebene befindet.

Bei der Transportstrecke kann es sich insbesondere um einen Teilabschnitt einer Förderstrecke innerhalb einer Verpackungsmaschine und/oder zur Förderverbindung von unterschiedlichen Verpackungsmodulen einer komplexeren Anlage handeln.

Die Beförderung der Stückgüter, die bspw. durch Verpackungseinheiten, durch Sekundär- und/oder durch Tertiärverpackungen o. dgl. gebildet sein können, kann in einem ersten Betriebsmodus mittels der mindestens zwei parallelen und voneinander beabstandeten Auflagebereiche erfolgen, so dass im vorliegenden Zusammenhang die Beförderung von solchen Stückgütern, die insbesondere eine erste Größe aufweisen oder einem ersten Typ entsprechen, durch die genannten Auflagebereiche erfolgen kann, welche die Stückgüter abstützen und befördern können.

Entsprechend derselben Systematik soll ein Transport von solchen Stückgütern, die insbesondere eine zweite Größe aufweisen oder einem zweiten Typ entsprechen, durch eine in einen zweiten Betriebsmodus gebrachte Transportstrecke erfolgen, wobei der zweite Betriebsmodus dadurch charakterisiert ist, dass in den Zwischenraum zwischen den mindestens zwei parallelen und voneinander beabstandeten Auflagebereichen die erwähnte lösbare Stützleiste eingesetzt wird, die im Wesentlichen die mittels der solchermaßen modifizierten Horizontalfördereinrichtung beförderten Stückgüter der zweiten Größe oder des zweiten Typs in einem mittleren Bereich abstützen soll, in dem diese Stückgüter nicht durch die beiden parallelen Auflagebereiche abgestützt sind, da diese voneinander beabstandet sind.

Wenn von Stückgütern einer ersten und einer zweiten Größe gesprochen wird, so können damit insbesondere Stückgüter gemeint sind, die sich in ihrer Breite voneinander unterscheiden, wobei die Stückgüter der ersten Größe normalerweise zumindest geringfügig breiter sein können als die Stückgüter der zweiten Größe.

Wenn zudem von Stückgütern eines ersten Typs und eines zweiten Typs gesprochen wird, so können damit insbesondere Stückgüter gemeint sein, die sich in ihren Gesamtmassen und/oder hinsichtlich ihrer Formstabilität voneinander unterscheiden, wobei Stückgüter des ersten Typs normalerweise eine etwas geringere Masse aufweisen können als Stückgüter des zweiten Typs. Außerdem kann damit gemeint sein, dass Stückgüter des zweiten Typs eine etwas geringere Formstabilität aufweisen können als die Stückgüter des ersten Typs, so dass die Letzteren möglicherweise problemlos auf der sich im ersten Betriebsmodus befindlichen Transportstrecke befördert werden können, während dies bei Stückgütern des zweiten Typs möglicherweise nicht der Fall ist.

Bei solchen Stückgütern des zweiten Typs kann es vorkommen, dass die Abstände der Auflagebereiche der Horizontalfördereinrichtung zu groß sind und dass dadurch ein mittlerer Bereich der Stückgüter nicht ausreichend gestützt wird, so dass dort eine Verformung, d.h. insbesondere eine Durchwölbung nach unten, stattfinden kann, die im Zusammenhang mit der Stückgutbeförderung als nicht erwünscht bzw. als nicht tolerierbar angesehen werden kann. Um solche unerwünschten Formänderungen zu verhindern, kann die Horizontalfördereinrichtung der erfindungsgemäßen Transportstrecke bedarfsweise in einen zweiten Betriebsmodus gebracht werden, bei dem die Stützleiste in den Zwischenraum zwischen den mindestens zwei parallelen und voneinander beabstandeten Auflagebereichen eingesetzt wird, so dass die Stützleiste sich in etwa auf einem Höhenniveau der sich in Förderrichtung bewegenden Auflageebene befindet.

Darüber hinaus kann wahlweise ein dritter Betriebsmodus für die erfindungsgemäße Transportstrecke vorgesehen sein, in dem die Transportstrecke für eine Förderung von Stückgütern einer dritten Größe oder eines dritten Typs umgerüstet wurde oder werden kann. So kann für diesen dritten Betriebsmodus vorgesehen sein, dass der Zwischenraum zwischen den mindestens zwei parallelen und voneinander beabstandeten Auflagebereichen mit einer zweiten, sich ebenfalls in Förderrichtung bewegenden Auflageebene ausgestattet wird, welche Auflageebene für den Transport von Stückgütern einer dritten Größe, die zumindest in einem Breitenmaß geringer ist als die erste Größe und/oder die zweite Größe vorgesehen und geeignet ist.

Sobald diese zweite Auflageebene in den Zwischenraum eingesetzt und dadurch der dritte Betriebsmodus hergestellt wurde, können die unverändert vorhandene erste Auflageebene und die eingesetzte zweite Auflageebene eine erweiterte gemeinsame Auflageebene mit vergrößerter Auflagefläche bilden. Um dies zu ermöglichen, bewegen sich die erste Auflageebene und die zweite Auflageebene vorzugsweise synchron, d.h. mit übereinstimmenden Fördergeschwindigkeiten.

Da es jedoch für bestimmte Transportaufgaben auch notwendig sein kann, solche Stückgüter oder Verpackungseinheiten auf der Transportstrecke zu befördern, die aufgrund ihrer geringeren Größe nicht mehr von den außenliegenden Auflagebereichen der ersten Auflageebene erfasst werden, kann die zweite Auflageebene der zusätzlichen Horizontalfördereinrichtung wahlweise für solche Stückgüter die Transportaufgabe erfüllen, so dass bspw. auch Verpackungseinheiten, Foliengebinde, Umreifungsgebinde oder andere Gebindevarianten transportiert werden können, die normalerweise durch die im ersten oder im zweiten Betriebsmodus befindliche Horizontalfördereinrichtung nicht zu befördern wären, etwa weil die sich in Förderrichtung bewegenden Auflagebereiche die zu befördernden Verpackungseinheiten, Foliengebinde, Umreifungsgebinde etc. aufgrund ihrer geringeren Breite gar nicht erfassen können.

In diesem dritten Betriebsmodus wird der Platz im Zwischenraum zwischen den mindestens zwei voneinander beabstandeten Auflagebereichen, der im zweiten Betriebsmodus von der mindestens einen Stützleiste eingenommen wird, von der zweiten Auflageebene beansprucht, die bspw. durch eine zusätzliche Horizontalfördereinrichtung gebildet sein kann, die in den Zwischenraum eingesetzt oder bedarfsweise wieder von dort entnommen werden kann, um solchermaßen wieder den ersten Betriebsmodus (oder den zweiten Betriebsmodus) herstellen zu können.

Die im zweiten Betriebsmodus in den Zwischenraum zwischen mindestens zwei voneinander beabstandeten Auflagebereichen der Horizontalfördereinrichtung einsetzbare lösbare Stützleiste, kann bspw. durch einen starren Längsträger gebildet sein, der auf Querträgern abgelegt werden kann. Vorzugsweise kann der Längsträger, der die Stützleiste bildet, ungefähr mittig zwischen den Auflagebereichen und vorzugsweise in etwa parallel zu diesen eingesetzt werden.

Die Querträger sind zu diesem Zweck vorzugsweise beweglich ausgebildet, insbesondere klappbar oder verschwenkbar. So können die Querträger bspw. an hierfür geeigneten Rahmenträgern der Horizontalfördereinrichtung schwenkbar gelagert sein, so dass sie insbesondere zwischen einer ersten Schwenklage oder Ruhelage und einer zweiten Schwenklage oder einer Betriebslage verschwenkt werden können, wobei sie in der zweiten Schwenklage oder Betriebslage unterhalb der Auflageebene und quer zu einer Transportrichtung liegen.

Die Querträger können insbesondere durch ausreichend stabile Rahmenbauteile gebildet sein, die insbesondere um vertikale Achsen schwenkbeweglich an den Rahmenträgern oder an einem Rahmenträger der Horizontalfördereinrichtung gelagert und gehalten sein können. Da die Querträger im ersten Betriebsmodus nicht benötigt werden, befinden sie sich hierbei vorzugsweise im eingeklappten Zustand in ihrer Ruhelage, die insbesondere dadurch charakterisiert sein kann, dass sich die Querträger jeweils in paralleler Ausrichtung unterhalb den sie tragenden Rahmenträgern der Horizontalfördereinrichtung befinden.

Der für die Herstellung des zweiten Betriebsmodus verwendbare und in den Zwischenraum zwischen den voneinander beabstandeten Auflagebereichen einfügbare Längsträger kann bspw. durch einen Balken mit einer Gleitebene als oberer Kontaktfläche zu den darauf gleitenden Stückgütern gebildet sein. Der Balken kann bspw. ein Hohlträger mit viereckigem oder rechteckförmigem Querschnitt sein.

Gemäß einer alternativen Ausführungsvariante könnte als Längsträger auch ein Balken mit Wälzelementen eingesetzt werden, wobei diese Wälzkörper eine Unterlage zum Darüberführen der Stückgüter ausbilden können. Ein besonders reibungsarmer Transport der Stückgüter kann etwa dadurch gewährleistet werden, indem diese auf Außenmantelflächen von zylindrischen, von tonnenförmigen oder von kugelförmigen Wälzkörpern entlanggleiten und abwälzen, die jeweils im Längsträger drehbar gelagert sind.

Sofern aus Sicht des angesprochenen Fachmannes sinnvoll miteinander kombinierbar, können einige der oder alle dieser zuvor genannten Variationen oder Ausführungsvarianten der erfindungsgemäßen Transportstrecke wahlweise auch miteinander kombiniert werden, um das/die oben formulierten Ziel(e) zumindest teilweise zu erreichen, und/oder um den gewünschten Effekt der Erfindung zu erzielen.

Zur Erreichung des oben genannten Ziels schlägt die Erfindung neben der in unterschiedlichen Ausführungsvarianten erläuterten Transportstrecke weiterhin ein Verfahren zum Modifizieren einer solchen Transportstrecke mit mindestens einer Horizontalfördereinrichtung vor, welche Transportstrecke bzw. welche Horizontalfördereinrichtung für wenigstens zwei unterschiedliche Betriebsmodi umgerüstet werden kann.

Die Horizontalfördereinrichtung stellt in einem ersten Betriebsmodus für einen Transport von Stückgütern oder Verpackungseinheiten einer ersten Größe oder eines ersten Typs eine erste sich in eine Förderrichtung bewegende Auflageebene zur Verfügung, die durch mindestens zwei parallele und voneinander beabstandete Auflagebereiche zur Abstützung und zur Beförderung der Stückgüter oder Verpackungseinheiten der ersten Größe oder des ersten Typs gebildet ist.

Zudem kann in den Zwischenraum zwischen den mindestens zwei parallelen und voneinander beabstandeten Auflagebereichen in einem zweiten Betriebsmodus der Horizontalfördereinrichtung für einen Transport von Stückgütern oder Verpackungseinheiten einer zweiten Größe oder eines zweiten Typs eine lösbare Stützleiste eingesetzt werden, die sich in etwa auf einem Höhenniveau der sich in Förderrichtung bewegenden ersten Auflageebene befindet. Damit ist insbesondere gemeint, dass die Stützleiste eine Stützfläche zur Verfügung stellt, die sich auf demselben Höhenniveau befindet wie die Auflagebereiche der ersten Auflagefläche.

Wahlweise kann das Verfahren vorsehen, dass die Transportstrecke bzw. die Horizontalfördereinrichtung in einen dritten Betriebsmodus überführt werden kann, bei dem die Stützleiste aus dem Zwischenraum entfernt ist, wonach eine zweite Auflageebene dort eingesetzt wird, die für eine Beförderung von Stückgütern oder Verpackungseinheiten einer dritten Größe oder eines dritten Typs geeignet ist. Auch die im dritten Betriebsmodus einsetzbare zweite Auflageebene bewegt sich in Förderrichtung.

Die zweite Auflageebene kann bspw. durch eine zusätzliche Horizontalfördereinheit gebildet sein, die im Ruhezustand bzw. im ersten Betriebsmodus und im zweiten Betriebsmodus in einem Bereich gelagert wird, der sich außerhalb des Förderbereiches der Stückgüter befindet. So kann für eine solche zusätzliche Horizontalfördereinheit bspw. eine Lagerung oberhalb der ersten Horizontalfördereinheit, gebildet durch die beiden Auflagebereiche mit der ersten Auflageebene, vorgesehen sein. Eine solchermaßen angeordnete zusätzliche Horizontalfördereinrichtung kann bspw. aus ihrer Ruhelage oberhalb des Förderniveaus der Transportstrecke abgesenkt und aktiviert werden, oder sie kann zur Herstellung des ersten Betriebsmodus oder des zweiten Betriebsmodus deaktiviert und aus dem Förderniveau der Transportstrecke herausgehoben werden.

Sofern dies aus Sicht des angesprochenen Fachmannes sinnvoll ist, können wahlweise einige der oder alle dieser zuvor genannten Variationen oder Ausführungsvarianten des erfindungsgemäßen Verfahrens wahlweise auch miteinander kombiniert werden, um das/die oben formulierten Ziel(e) zumindest teilweise zu erreichen, und/oder um den gewünschten Effekt der Erfindung zu erzielen.

Es sei an dieser Stelle ausdrücklich erwähnt, dass alle Aspekte und Ausführungsvarianten, die im Zusammenhang mit der erfindungsgemäßen Transportstrecke erläutert wurden, gleichermaßen Teilaspekte des erfindungsgemäßen Verfahrens betreffen oder bilden können. Wenn daher an einer Stelle bei der Beschreibung oder auch bei den Anspruchsdefinitionen zur erfindungsgemäßen Transportstrecke von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Transportstrecke betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Transportstrecke, und dies gilt auch für alle ihre Ausführungsvarianten.

Ergänzend sei an dieser Stelle darauf hingewiesen, dass die Erfindung sich auch auf einen Nachrüstsatz für ein Verpackungsmodul einer Verpackungsmaschine erstreckt, und zwar insbesondere auf einen Nachrüstsatz zur Ausstattung und Ergänzung einer Transportstrecke gemäß einer der oben beschriebenen Ausführungsvarianten. Ein solcher Nachrüstsatz umfasst zumindest die oben beschriebenen Querträger sowie den die Stützleiste bildenden und auf den verschwenkten Querträgern ablegbaren Längsträger.

Bei dem Nachrüstsatz sind die Querträger vorzugsweise jeweils an hierfür geeigneten Rahmenträgern einer Horizontalfördereinrichtung montierbar ausgebildet, wie sie oben in unterschiedlichen Varianten beschrieben wurde.

Abschließend sei auch an dieser Stelle darauf hingewiesen, dass sich alle oben genannten Aspekte, die die erfindungsgemäße Transportstrecke zum Gegenstand hatten, sich ebenso auf den Nachrüstsatz und seine Elemente beziehen können. Wenn also weiter oben - oder auch in der nachfolgenden Figurenbeschreibung - von einzelnen Aspekten die Rede war, die sich auf die Querträger und/oder auf den Längsträger beziehen, so soll diese Aspekte und Eigenschaften jeweils auch für den Nachrüstsatz und seine Komponenten Gültigkeit haben.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Perspektivansicht einer Ausführungsvariante einer erfindungsgemäß ausgestalteten Transportstrecke, die sich in einem ersten Betriebsmodus befindet.
Fig. 2A zeigt eine schematische Frontansicht der Transportstrecke gemäß Fig. 1, die sich in einem ersten Betriebsmodus befindet.
Fig. 2B zeigt eine schematische Frontansicht der Transportstrecke gemäß Fig. 1, die sich wiederum im ersten Betriebsmodus befindet, wobei sich ein zu beförderndes Stückgut verformt.
Fig. 2C zeigt eine schematische Frontansicht der Transportstrecke gemäß Fig. 1, die sich in einem zweiten Betriebsmodus befindet.
Fig. 2D zeigt eine schematische Frontansicht der Transportstrecke gemäß Fig. 1, die sich in einem dritten Betriebsmodus befindet.
Fig. 3 zeigt eine schematische Draufansicht von oben auf die Transportstrecke, die sich in einem zweiten Betriebsmodus befindet.
Fig. 4A zeigt in einer perspektivischen Detailansicht einen Ausschnitt der Transportstrecke, die sich hierbei im ersten Betriebsmodus befindet.
Fig. 4B zeigt in einer weiteren perspektivischen Detailansicht einen Ausschnitt der Transportstrecke, die sich hierbei im zweiten Betriebsmodus befindet.

Für gleiche oder gleich wirkende Elemente der Erfindung verwendet die nachfolgende Figurenbeschreibung in der Regel jeweils gleiche Bezugsziffern. Ferner werden der Übersicht halber in vielen Fällen nur solche Bezugsziffern in den einzelnen Figuren verwendet, die für die Beschreibung der jeweiligen Figur erforderlich sind. Die dargestellten Ausführungsformen stellen lediglich Beispiele dar, wie die erfindungsgemäße Transportstrecke oder das erfindungsgemäße Verfahren zu deren Anpassung an unterschiedliche Transporterfordernisse ausgestaltet sein können und stellen keine abschließende Begrenzung dar. Auch sind die nachfolgend beschriebenen Merkmale jeweils nicht in engem Zusammenhang mit weiteren Merkmalen des jeweiligen Ausführungsbeispiels zu verstehen, sondern können jeweils im allgemeinen Zusammenhang vorgesehen sein bzw. hierfür Verwendung finden.

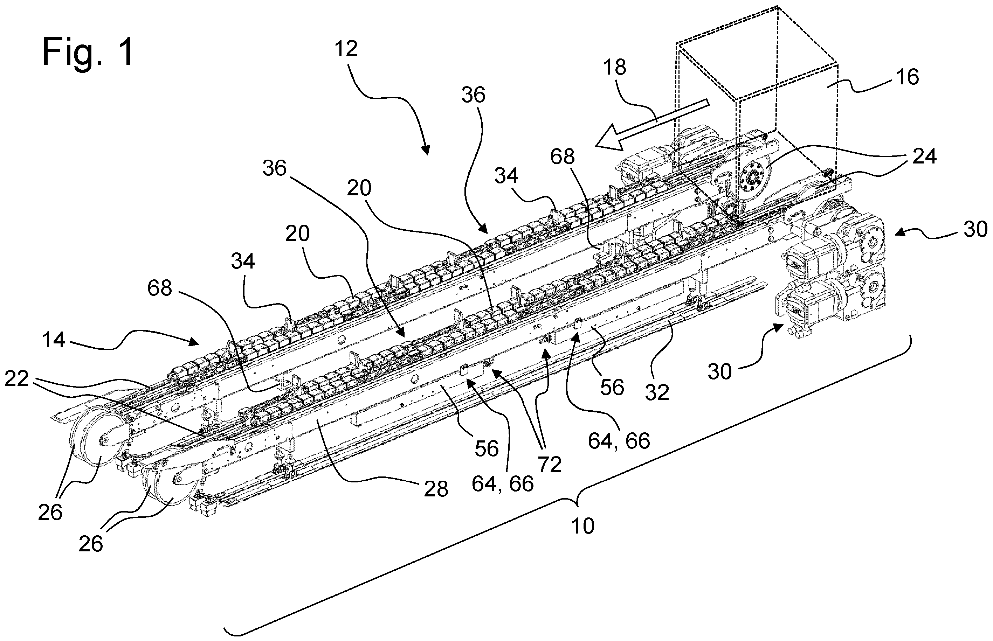

Die schematische Perspektivansicht der Fig. 1 zeigt eine Ausführungsvariante einer erfindungsgemäßen Transportstrecke 10, die insbesondere Bestandteil einer hier nicht gezeigten Verpackungsmaschine sein kann. Die gezeigte Transportstrecke 10 ist durch eine Horizontalfördereinrichtung 12 mit einer Auflageebene 14 gebildet, auf der Stückgüter 16 in einer Förderrichtung 18 bewegt werden können. Um die Stückgüter 16 in Förderrichtung 18 (in Fig. 1 von rechts oben nach links unten weisend) bewegen zu können, bewegt sich bei der gezeigten Horizontalfördereinrichtung 12 die Auflageebene 14 in Förderrichtung 18.

Ein quaderförmiges Stückgut 16, das mit seiner Unterseite auf der sich in Förderrichtung 18 bewegenden Auflageebene 14 steht, ist hier lediglich durch unterbrochene Linierung schematisch angedeutet.

Die sich in Förderrichtung 18 bewegende Auflageebene 14 ist im gezeigten Ausführungsbeispiel durch zwei parallele und seitlich voneinander beabstandete Auflagebereiche 20 gebildet, die der Abstützung und der Beförderung der Stückgüter 16 dienen. Wie es die schematische Perspektivansicht der Fig. 1 erkennen lässt, sind die Auflagebereiche 20 jeweils durch oberseitige Abschnitte von umlaufenden Zugmitteln 22 gebildet, die jeweils über Umlenkrollen 24 und 26 geführt sind, deren Positionen die Längsausdehnung und Länge der hier beispielhaft gezeigten Transportstrecke 10 definieren.

Die Umlenkrollen 24 und 26 jedes der beiden parallel verlaufenden und gleichartig aufgebauten Zugmittels 22, deren Oberseite jeweils die Auflagebereiche 20 für den Transport der Stückgüter 16 zur Verfügung stellen, sind in horizontal angeordneten Rahmenträgern 28 drehbar gelagert, so dass ihre Drehachsen jeweils horizontal und quer zur Umlaufrichtung der Zugmittel 22, die auch die Förderrichtung 18 ist, orientiert sind.

Erste Umlenkrollen 24 befinden sich hierbei am Beginn der Transportstrecke 10, in Bezug auf die Förderrichtung 18 gesehen. Im gezeigten Ausführungsbeispiel sind die ersten Umlenkrollen 24, deren Drehachsen miteinander fluchten, jeweils angetrieben, was durch Antriebsmotoren 30 verdeutlich ist, die sich auf Höhe der ersten Umlenkrollen 24 befinden und die bspw. jeweils an den Rahmenträgern 28 montiert sein können. Die für den Antrieb der Zugmittel 22 verantwortlichen Antriebsmotoren 30 sind jeweils als Getriebemotoren ausgebildet, die mittels einer Kegelradumlenkung um 90° verschwenkt montiert sind, so dass ihr Motorgehäuse platzsparend in Längsrichtung parallel zu den Rahmenträgern 28 ausgerichtet ist. Die Antriebsmotoren 30 können bspw. durch Elektromotoren, durch Hydromotoren o. dgl. gebildet sein.

Zweite Umlenkrollen 26 befinden sich zudem am Ende der Transportrecke 10, in Bezug auf die Förderrichtung 18 gesehen. Im gezeigten Ausführungsbeispiel sind die zweiten Umlenkrollen 26, deren Drehachsen wiederum miteinander fluchten, jeweils nicht angetrieben, sondern dienen lediglich der Führung und Umlenkung des jeweils darüber laufenden Zugmittels 22. Die Drehachsen der ersten und zweiten Umlenkrollen 24 und 26 befinden sich jeweils auf gleicher Höhe, so dass sich zumindest die Oberseiten der Zugmittel 22, welche die Auflagebereiche 20 bilden, in horizontaler Ausrichtung befinden und bewegen, was bereits begrifflich durch die Horizontalfördereinrichtung 12 zum Ausdruck gebracht ist, welche die Transportstrecke 10 bildet.

Die perspektivische Ansicht der Fig. 1 lässt im Wesentlichen nur Teile der die jeweiligen Auflagebereiche 20 bildenden oberen Bereiche der beiden Zugmittel 22 erkennen, währen die in entgegengesetzter Richtung zur Förderrichtung 18 unterhalb der Auflageebene 14 und unterhalb der horizontalen Rahmenträger 28 von den zweiten Umlenkrollen 26 zu den ersten Umlenkrollen 24 zurücklaufenden Bereiche der Zugmittel 22 der besseren Übersichtlichkeit halber nicht dargestellt sind. Es sind allerdings Gleitschienen 32 erkennbar, die unterseitig an den horizontalen Rahmenträgern 28 montiert und somit in einem definierten Abstand zu den Rahmenträgern 28 angeordnet sind. Diese Gleitschienen 32 deinen jeweils als Führungen für die unterhalb der Auflageebene 14 zurücklaufenden Bereiche der Zugmittel 22.

Was die schematische Ansicht der Fig. 1 außerdem erkennen lässt, sind oberseitig aus der Auflageebene 14 herausragende Schubfinger 34, die der Horizontalfördereinrichtung 12 weitere Funktionselemente hinzufügen. So können diese Schubfinger 34 in regelmäßigen Abständen voneinander an einzelnen Gliedern oder Bereichen der jeweiligen Zugmittel 22 angeordnet sein, wobei die Schubfinger 34 der voneinander beabstandeten Zugmittel 22 der jeweiligen Auflagebereiche 20 sinnvollerweise miteinander fluchten, wodurch sie paarweise rückseitig an einem auf der Horizontalfördereinrichtung 12 in Förderrichtung 18 zu bewegendem Stückgut 16 angreifen können. Die regelmäßig voneinander beabstandeten Schubfinger 34 an den parallelen Zugmitteln 22 können somit die entsprechenden Positionen der Stückgüter 16 auf der Auflageebene 14 und auch deren Abstände voneinander definieren.

Schließlich sei auf die durch die Fig. 1 verdeutlichte Ausführungsvariante der Horizontalfördereinrichtung 12 hingewiesen, bei der jeder der beiden parallelen und voneinander beabstandeten Auflagebereiche 20, die durch die sich in Förderrichtung 18 bewegenden Oberseiten der Zugmittel 22 gebildet sind, an jedem der Auflagenbereiche 20 zwei nah beieinander befindliche Zugmittel 22 vorgesehen sind, die somit jeweils ein Zugmittelpaar 36 bilden. Sowohl die doppelt ausgeführten ersten und zweiten Umlenkrollen 24 und 26 als auch die darüber geführten und doppelt ausgeführten Zugmittel 22 mit ihren jeweiligen Schubfingern 34 und darüber hinaus die doppelt ausgeführten und übereinander angeordneten Antriebsmotoren 30 lassen erkennen, dass die beiden Zugmittelpaare 36 in ihrem jeweiligen Zusammenwirken die beiden parallelen und voneinander beabstanden Auflagenbereiche 20 zum Transport der Stückgüter 16 in Förderrichtung 18 bilden.

Die doppelt ausgeführten Antriebsmotoren 30 verdeutlichen dabei eine sinnvolle Antriebsoption der Zugmittelpaare 36, bei denen jedes der beiden Zugmittel 22 eines der beiden Zugmittelpaare 36 über einen eigenen Antriebsmotor 30 verfügt, so dass die Zugmittel 22 wahlweise exakt synchron oder bedarfsweise mit kurzzeitig unterschiedlichen Antriebsgeschwindigkeiten umlaufend angetrieben werden können. Da jedes Zugmittel 22 des jeweiligen Zugmittelpaares 36 über seine Schubfinger 34 verfügt, die an unterschiedlichen Positionen angeordnet sind, können die Schubfinger 34 des einen Zugmittels 22 des Zugmittelpaares 36 rückseitig an ein zu beförderndes Stückgut 16 angreifen, während die Schubfinder 34 des jeweils anderen Zugmittels 22 des Zugmittelpaares 36 vorderseitig an das jeweilige Stückgut 16 angelegt werden können, so dass eine exakte vorderseitige und rückseitige Führung jedes einzelnen Stückgutes 16 ermöglicht ist.

Eine solche vorderseitige und rückseitige Führung einzelner Stückgüter 16 kann insbesondere bei flachen Kartonunterlagen mit seitlich nach oben gefalteten Faltlaschen von Vorteil sein, insbesondere wenn die Faltlaschen noch nicht stabilisiert sind, so dass sie durch die Schubfinger 34 stabilisiert werden können. Auf solchen flachen Kartonunterlagen, die oftmals auch als Tray bezeichnet werden, können sich mehrere einzelne Artikel, vorzugsweise in gruppierter Rechteckanordnung oder in hexagonaler Anordnung, befinden, bspw. eine größere Anzahl an Getränkedosen oder Getränkebehältern, die mittels eines solchen Trays zusammengefasst sein können.

Somit kann eine solche Kartonunterlage bzw. ein solcher Tray (hier nicht gezeigt) ein sekundäres Verpackungsmittel der eine sekundäre Verpackung für eine Vielzahl an primären Verpackungen, gebildet durch die erwähnten Artikel, Dosen oder Behälter, bilden. Wahlweise können derartige Sekundärverpackungen mit tertiären Verpackungsmitteln ausgestattet werden, bspw. durch Umhüllen der Trays mit den darauf stehenden Primärverpackungen mit einer Folienverpackung, die in diesem Fall eine tertiäre Verpackung bilden kann.

Die paarweise Anordnung der beiden Zugmittelpaare 36 mit ihren relativ zueinander positionierbaren Schubfingern 34 kann somit die beiden Auflagebereiche 20 bilden, die in der dargestellten Weise in ihrem Zusammenwirken die sich in Förderrichtung 18 bewegende Auflageebene 14 für den Transport der Stückgüter 16 bildet.

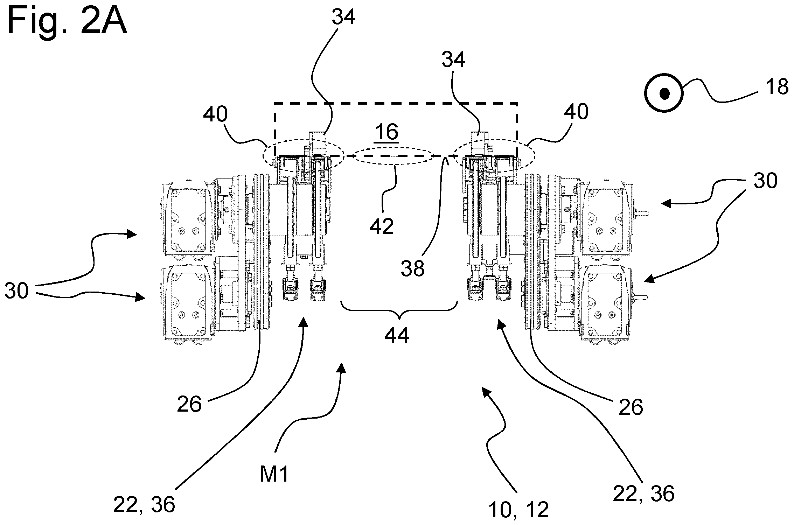

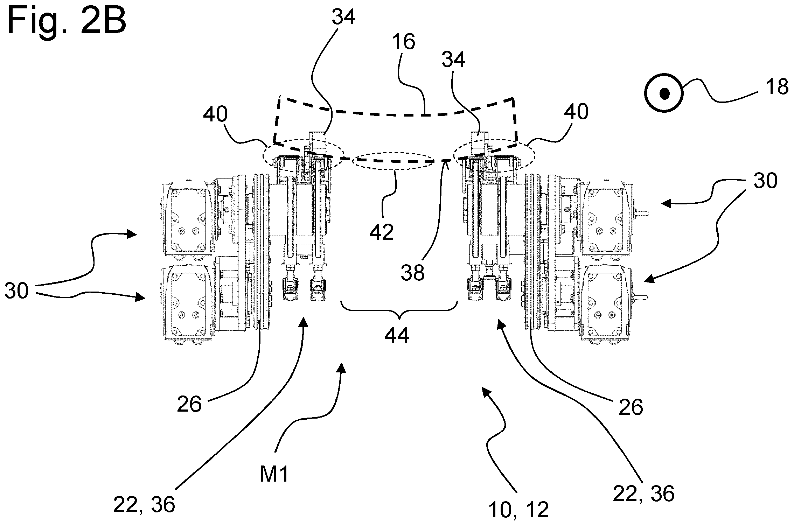

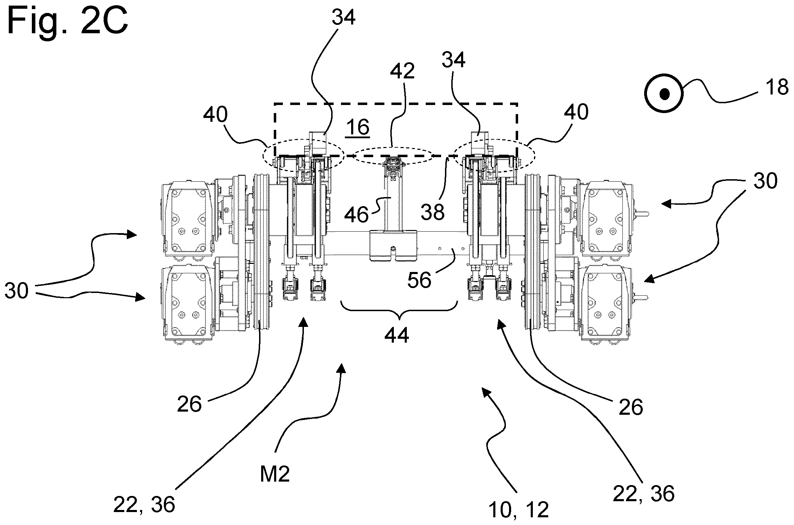

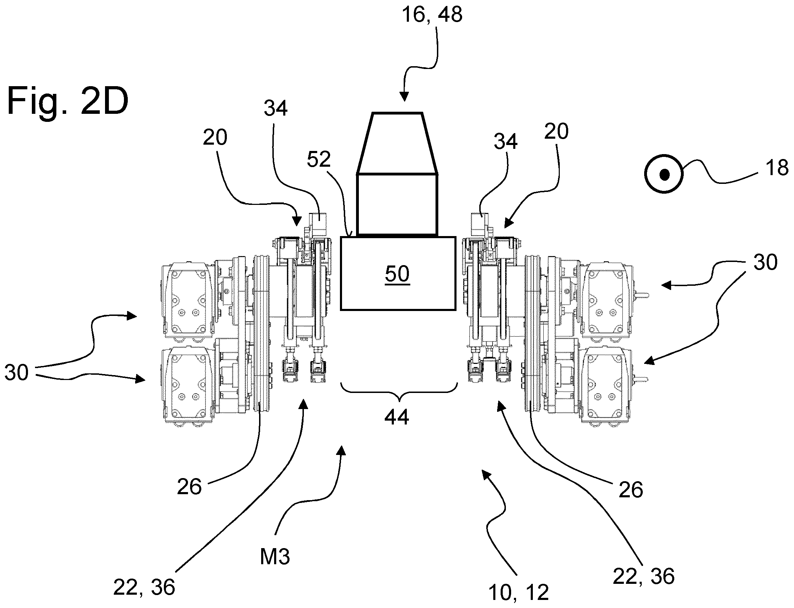

Die insgesamt vier schematischen Frontansichten der Figuren 2A, 2B, 2C und 2D verdeutlichen unterschiedliche Betriebsmodi, in der die erfindungsgemäße Transportstrecke 10 für jeweils unterschiedliche Förderaufgaben betrieben werden kann. Die Frontansichten zeigen jeweils die Horizontalfördereinrichtung 12 der Transportstrecke 10 in einer Blickrichtung auf das Ende der Transportstrecke 10, d.h. in einer Richtung entgegengesetzt zur Förderrichtung 18 (vgl. Fig. 1), die in üblicher Weise zeichnerisch durch einen Kreis mit mittig darin befindlichem Punkt dargestellt ist, was eine aus der Zeichnungsebene senkrecht herausweisende Förderrichtung 18 symbolisieren soll.

Erkennbar sind in den Figuren 2A, 2B, 2C und 2D somit die insgesamt vier mit ihren jeweiligen Drehachsen in Fluchtung befindlichen zweiten Umlenkrollen 26, über welche die insgesamt vier Zugmittel 22 der beiden voneinander beabstandeten Zugmittelpaare 36, welche Zugmittelpaare 36 die oberseitig befindlichen Auflagebereiche 20 der Auflageebene 14 (vgl. hierzu Fig. 1) zur Verfügung stellen. Erkennbar sind außerdem die insgesamt vier Antriebsmotoren 30, die in paarweiser Anordnung übereinander für den gesteuerten Antrieb der insgesamt vier Zugmittel 22 sorgen können.

Die Fig. 2A verdeutlicht den Transport eines bspw. quaderförmigen Stückgutes 16, das auf der sich in Förderrichtung 18 bewegenden Auflageebene 14, gebildet durch die oberseitig der beiden Zugmittelpaare 36 befindlichen Auflagebereiche 20, in Richtung zum Betrachter befördert wird. Die beiden dort erkennbaren Schubfinger 34, die aus der Auflageebene 14 herausragen, können jeweils frontseitig am Stückgut 16 anliegen und dieses somit in seiner Position halten. Die beiden vorzugsweise rückseitig am Stückgut 16 angreifenden weiteren Schubfinger 34 sind hier nicht erkennbar, weil sie durch das Stückgut 16 verdeckt sind.

Eine Unterseite 38 oder Bodenfläche des Stückgutes 16 liegt mit ihren beiden randseitigen Bereichen 40 auf den Auflagebereichen 20 der Zugmittelpaare 36 auf, während ein nicht gestützter mittlerer Bereich 42 der Unterseite 38 vorzugsweise ebenso horizontal ausgerichtet bleibt wie die randseitigen Bereiche 40, was bei nicht zu schwer beladenen Sekundärverpackungen oder Trays, welche die Stückgüter 16 je nach Transportsituation bilden können, problemlos durch die Eigenstabilität des bspw. durch einen Kartonzuschnitt mit faltbaren Seitenrändern gebildeten Stückgutes 16 gewährleistet werden kann.

Die Frontansicht der Fig. 2A verdeutlicht somit einen ersten Betriebsmodus M 1 der Horizontalfördereinrichtung 12 bzw. der Transportstrecke 10, in dem Stückgüter 16 ausschließlich mittels der durch die voneinander beabstandeten Auflagebereiche 20 gebildeten Auflageebene 14 gestützt und solchermaßen befördert werden.

Die Frontansicht der Fig. 2B verdeutlicht denselben ersten Betriebsmodus M1 der Horizontalfördereinrichtung 12 bzw. der Transportstrecke 10, in dem die Stückgüter 16 auf derselben Auflageebene 14 gestützt und befördert werden. Hier sind die Stückgüter 16 jedoch schwerer beladen, was etwa durch eine größere Anzahl von Behältern (hier nicht gezeigt) ausgelöst und verursacht sein kann, die auf einem Tray oder einer Kartonunterlage stehen, welche das jeweilige Stückgut 16 bilden.

Wie es die Fig. 2B in schematischer und zeichnerisch leicht übertriebener Weise verdeutlicht, ist hierbei die Unterseite 38 oder Bodenfläche des Stückgutes 16 mit ihrem mittleren Bereich 42 nach unten gewölbt. Zwar liegt die Unterseite 38 im ersten Betriebsmodus M1 der Horizontalfördereinrichtung 12 bzw. der Transportstrecke 10 mit ihren beiden randseitigen Bereichen 40 weiterhin auf den Auflagebereichen 20 der Zugmittelpaare 36 auf, doch kann sich bei zu schweren oder zu schwer beladenen Stückgütern 16 der nicht ausreichend abgestützte mittlere Bereich 42 der Unterseite 38 aufgrund der Beladung des Stückgutes 16 nach unten durchwölben, so dass sich die Abstände der durch die Auflagebereiche 20 gebildeten randseitigen Bereiche 40 als zu groß für das jeweilige Gewicht und die jeweilige Formstabilität der beförderten Stückgüter 16 erweisen können.

Die Eigenstabilität der Stückgüter 16 kann unter Umständen zu gering sein, was durch die gezeigte unerwünschte Formänderung des in Fig. 2B dargestellten Stückgutes 16 verdeutlicht wird. Eine solche Formänderung der Stückgüter 16 mit sich nach unten durchwölbendem Boden oder der sich in ihrem mittleren Bereich 42 nach unten durchwölbenden Unterseite 38 kann sich bspw. bei schwerer beladenen Sekundärverpackungen oder Trays, welche die Stückgüter 16 bilden können, dadurch ergeben, dass z.B. die faltbaren Seitenränder eines Kartonzuschnittes noch nicht verklebt wurden und deshalb nicht in der Lage sind, eine ausreichende Stabilität zu vermitteln.

Dass zur Vermeidung solcher Effekte die beiden voneinander Auflagebereiche 20, gebildet durch die umlaufend bewegten Oberseiten der Zugmittelpaare 36, für einen solchen Fall, wie er in Fig. 2B gezeigt ist, nicht einander angenähert werden oder mit breiteren Auflagebereichen 20 ausgeführt werden können, hängt mit einer nachfolgend anhand von Fig. 2D erläuterten weiteren Transportsituation zusammen, die im vorliegenden Zusammenhang als ein dritter Betriebsmodus M3 bezeichnet wird.

Anhand der in Fig. 2D veranschaulichten Transportsituation der Horizontalfördereinrichtung 12 bzw. der Transportstrecke 10 lässt sich veranschaulichen, dass der Zwischenraum 44 zwischen den beiden Zugmittelpaaren 36, welche gemeinsam die voneinander beabstandeten Auflagebereiche 20 zur Verfügung stellen, für eine zusätzliche Horizontalfördereinrichtung benötigt wird, die dort eingesetzt werden kann.

Um jedoch die Stückgüter 16 der in Fig. 2A oder Fig. 2B gezeigten ersten Größe oder des dort gezeigten ersten Typs mit der Horizontalfördereinrichtung 12 gemäß Fig. 1 befördern zu können, ohne dass sich die Unterseite 38 in der in Fig. 2B gezeigten Weise in ihrem mittleren Bereich 42 nach unten durchwölbt, kann in den Zwischenraum 44 zwischen den beiden parallelen und voneinander beabstandeten Auflagebereichen 20 eine lösbare Stützleiste 46 eingesetzt werden, die sich in etwa auf einem Höhenniveau der sich in Förderrichtung 18 bewegenden Auflageebene 14 befindet.

Durch das Einsetzen einer solchen Stützleiste 46 gemäß Fig. 2C wird ein zweiter Betriebsmodus M2 der Horizontalfördereinrichtung 12 bzw. der Transportstrecke 10 gebildet, der es ermöglicht, auch schwerere oder schwerer beladene Stückgüter 16 des erwähnten ersten Typs oder der ersten Größe zu befördern, wobei die Unterseite 38 solcher Stückgüter 16 aufgrund der den mittleren Bereich 42 des Bodens oder der Unterseite 38 abstützenden Stützleiste 46 unverformt und unverwölbt bleiben kann, so dass der mittlere Bereich 42 auf demselben horizontalen Niveau gehalten werden kann wie die randseitigen äußeren Bereiche 40, die jeweils auf den Auflagebereichen 20 der Horizontalfördereinrichtung 12 aufliegen.

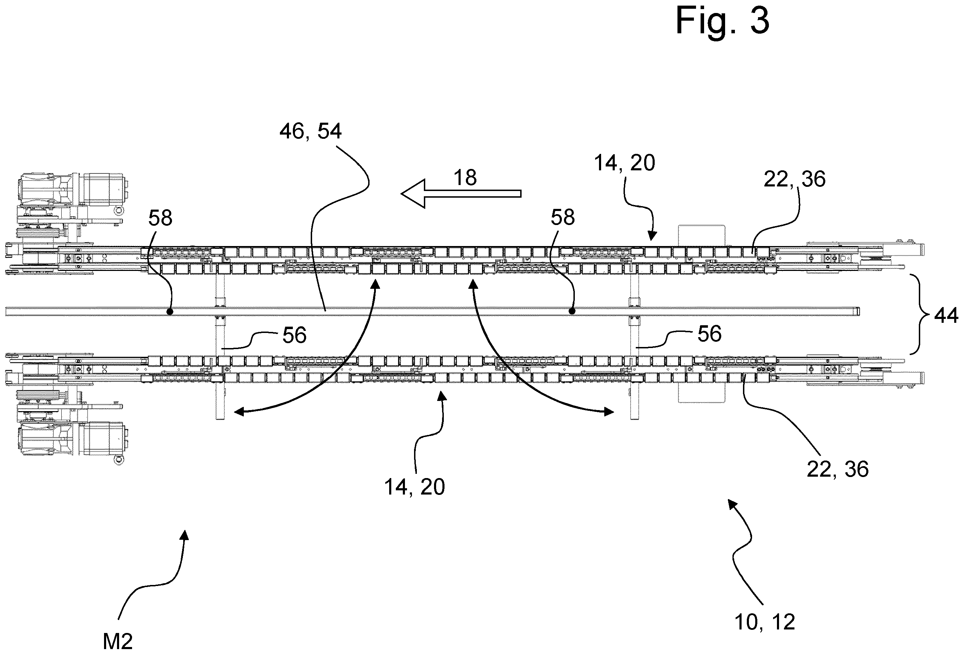

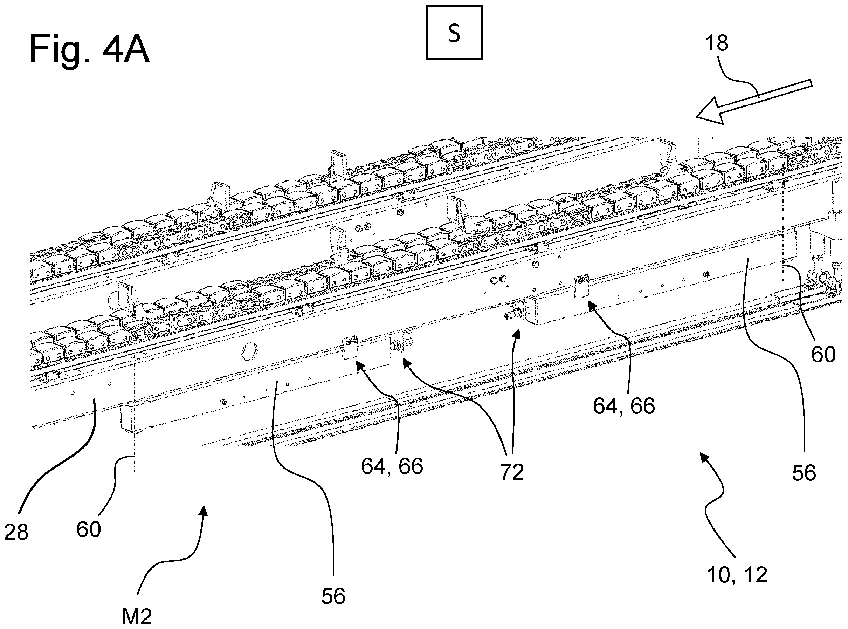

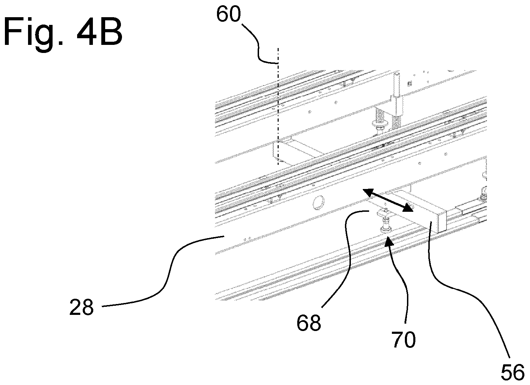

Wie es sich in den Figuren 3, 4A und 4B noch näher verdeutlicht findet, kann die Stützleiste 46 insbesondere auf mehreren Querträgern 56 abgestützt werden, die hierfür jeweils in eine Betriebslage bewegt und verschwenkt werden können.

Die Frontansicht der Fig. 2D veranschaulicht in schematischer Weise den erwähnten dritten Betriebsmodus M3, der im Wesentlichen dazu dient, Stückgüter 16 einer zweiten Größe oder eines zweiten Typs befördern zu können, die zumindest wegen ihrer geringeren Breite nicht mittels der Horizontalfördereinrichtung 12, wie sie in Fig. 1 sowie in den Figuren 2A bis 2C gezeigt ist, befördert werden könnten.

Solche Stückgüter 16, die bspw. durch kleinere Pakete oder auch durch Foliengebinde 48, Umreifungsgebinde oder dgl. gebildet sein können, werden im vorliegenden Zusammenhang als Stückgüter 16 zweiten Typs oder als Stückgüter 16 zweiter Größe bezeichnet, um sie von den Stückgütern 16 ersten Typs oder erster Größe unterscheiden zu können, die mit der Horizontalfördereinrichtung 12 im ersten Betriebsmodus M1 oder im zweiten Betriebsmodus M2 auf der Transportstrecke 10 befördert werden können.

Anhand der in Fig. 2D veranschaulichten Transportsituation der Horizontalfördereinrichtung 12 bzw. der Transportstrecke 10 im dritten Betriebsmodus M3 wird deutlich, dass der Zwischenraum 44 zwischen den beiden Zugmittelpaaren 36, welche gemeinsam die voneinander beabstandeten Auflagebereiche 20 zur Verfügung stellen, zumindest teilweise durch eine zusätzliche oder zweite Horizontalfördereinrichtung 50 ausgefüllt sein kann, die dort insbesondere durch Absenken von oben eingesetzt werden kann.

Eine derartige zusätzliche oder zweite Horizontalfördereinrichtung 50 kann eine zweite Auflageebene 52 zur Verfügung stellen, die wahlweise dasselbe Höhenniveau aufweisen kann, wie es durch die beiden Auflagebereiche 20 der Auflageebene 14 gebildet ist. Da diese zusätzliche oder zweite Horizontalfördereinrichtung 50 jedoch auch solche Stückgüter 16 oder Foliengebinde 48 auf ihrer zweiten Auflageebene 52 befördern können soll, die schmaler sind als der Zwischenraum 44 zwischen den Innenkanten der voneinander beabstandeten Zugmittelpaare 36 mit ihren jeweiligen Auflagebereichen 20, kann die zusätzliche oder zweite Horizontalfördereinrichtung 50 mit ihrer zweiten Auflageebene 52 im dritten Betriebsmodus M3 der Transportstrecke 10 wahlweise auch geringfügig höher oder tiefer positioniert werden als die Auflagebereiche 20.

In der in Fig. 2D gezeigten Transportsituation werden die Auflagebereiche 20 nicht für den Transport der schmalen Foliengebinde 48 genutzt, ebenso wenig wie die Schubfinger 34, die an den Zugmitteln 22 angeordnet sind.

Die für den dritten Betriebsmodus M3 in den Zwischenraum einzusetzende zusätzliche Horizontalfördereinrichtung 50 kann bspw. in einem Aufbewahrungsbereich oder in einer Bereitstellungsposition oberhalb des Förderniveaus der Transportstrecke 10 bereitgehalten werden, da sie für die ersten und zweiten Betriebsmodi M1 und M2 nicht benötigt wird. Für den dritten Betriebsmodus M3 kann die zusätzliche Horizontalfördereinrichtung 50 bspw. aus ihrer Bereitstellungsposition herabgesenkt und in den Zwischenraum 44 eingefügt werden, um ihre Transportaufgabe für die Beförderung der entsprechenden Stückgüter 16, gebildet bspw. durch die schematisch angedeuteten Foliengebinde 48, erfüllen zu können.

Es sei an dieser Stelle darauf hingewiesen, dass eine solche Konfiguration mit derart umrüstbaren Horizontalfördereinrichtungen bspw. den in der der deutschen Offenlegungsschrift 10 2010 050 524 A1 beschriebenen Aufbau oder einen vergleichbaren oder ähnlichen Aufbau aufweisen kann. Dort findet sich allerdings kein Hinweis auf einen zweiten Betriebsmodus M2 mit einer einsetzbaren Stützleiste 46, gebildet bspw. durch einen in den Zwischenraum 44 einfügbaren Längsträger 54. Die DE 10 2010 050 524 A1 beschreibt allerdings eine in Ruhelage oberhalb einer ersten Horizontalfördereinrichtung ablegbare zweite Horizontalfördereinrichtung, die für einen geänderten Betriebsmodus abgesenkt und anstelle der ersten Horizontalfördereinrichtung in deren Position gebracht und dort betrieben werden kann, um Stückgüter oder Verpackungseinheiten anderer Größe oder anderen Typs besser transportieren zu können.

Die schematische Draufsicht der Fig. 3 zeigt einen Teil der Transportstrecke 10 mit ihrer zugehörigen Horizontalfördereinrichtung 12 im zweiten Betriebsmodus M2, in dem die lösbare Stützleiste 46 mittig in den Zwischenraum 44 zwischen den beiden voneinander beabstandeten linksseitigen und rechtsseitigen Zugmittelpaaren 36 mit ihren jeweiligen Auflagebereichen 20 eingesetzt ist.

Im gezeigten Ausführungsbeispiel ist die lösbare Stützleiste 46 durch einen starren Längsträger 54 gebildet, der auf mindestens zwei Querträgern 56 abgelegt ist. Eine Längserstreckungsrichtung des die Stützleiste 46 bildenden Längsträgers 54 ist parallel zu den Längserstreckungsrichtungen der Auflagebereiche 20 ausgerichtet und damit auch parallel zur Förderrichtung 18. Wahlweise könnten auf den Querträgern 56 auch zwei oder mehrere solcher Längsträger 54 abgelegt sein, die sinnvollerweise voneinander zu beabstanden wären.

Der Längsträger 54, der die Stützleiste 46 bildet, kann in seiner einfachsten Ausführungsvariante bspw. durch einen Balken mit rechteckförmigem Hohlprofil und einer nach oben weisenden Schmalseite gebildet sein, wobei diese nach oben weisende Schmalseite eine obere Kontaktfläche 58 als Gleitebene für die darauf abgleitenden Stückgüter 16 zur Verfügung stellt. Die Stückgüter 16 können somit in der in Fig. 2C gezeigten Weise mit ihren Unterseiten 38 auf der Kontaktfläche 58 entlanggleiten, so dass der mittlere Bereich 42 der Unterseite 38 keine Durchwölbung nach unten erfährt, sondern in der gezeigten Weise abgestützt ist.

Wahlweise könnte der Längsträger 54 auch eine obere Kontaktfläche 58 mit mehreren Wälzelementen (hier nicht gezeigt) aufweisen, wodurch eine mittige Unterlage zum Darüberführen der Stückgüter 16 gebildet wäre, bei der die Unterseiten 38 der Stückgüter 16 bspw. auf Außenmantelflächen von zylindrischen, von tonnenförmigen oder von kugelförmigen Wälzkörpern entlanggleiten und abwälzen könnten. Diese optionalen Wälzkörper wären sinnvollerweise in geeigneter Weise im Längsträger zu lagern, so dass sie bedarfsweise möglichst reibungsarm rotieren könnten, wenn Stückgüter 16 auf ihren Außenmantelflächen abgestützt und befördert werden.

Die mindestens zwei Querträger 56, die als Ablage und als Auflager für den darauf ablegbaren Längsträger 54 dienen können, sind beweglich an den horizontalen Rahmenträgern 28 gelagert und können zwischen einer Ruhelage (vgl. Fig. 1) und einer Betriebslage um 90° um vertikale Schwenkachsen verschwenkt werden, wie dies in den perspektivischen Detailansichten der Figuren 4A und 4B gezeigt ist.

So verdeutlicht die Fig. 4A die Ruhelage der beiden unterseitig an den jeweils ein rechteckförmiges Hohlprofil aufweisenden horizontalen Rahmenträgern 28 der Horizontalfördereinrichtung 12 gehaltenen Querträger 56, die bspw. ebenfalls rechteckförmiges Hohlprofil aufweisen können, wie dies durch die perspektivischen Darstellungen der Figuren 1, 4A und 4B verdeutlicht ist.

Eine vertikale Schwenkachse 60, um die jeder der mindestens zwei Querträger 56 jeweils verschwenkt werden kann, ist ebenfalls jeweils in Fig. 4A verdeutlicht. Die beiden vertikalen Schwenkachsen 60 verlaufen sinnvollerweise durch einen der beiden Rahmenträger 28 hindurch, und zwar durch den linksseitigen, in Bezug auf die Förderrichtung 18, der in den Figuren 1, 4A und 4B jeweils dem Betrachter zugewandt ist.

Außerdem verdeutlicht die perspektivische Detailansicht der Fig. 4B eine Betriebslage eines der beiden Querträgers 56, bei der er um seine vertikale Schwenkachse 60 um 90° verschwenkt ist, so dass er nicht mehr mit der Längserstreckungsrichtung des ihn tragenden horizontalen Rahmenträgers 28 der Horizontalfördereinrichtung 12 fluchtet (vgl. Fig. 1 und Fig. 4A), sondern quer zu dieser ausgerichtet ist und zum anderen Rahmenträger 28, dem in Förderrichtung gesehen rechtsseitigen, hinüberreicht.

Die schematische Draufsicht der Fig. 3 verdeutlichen diese Betriebslage mit den beiden um 90° aus der Ruhelage herausgeschwenkten Querträgern 56, auf deren Oberseite der Längsträger 54 abgelegt ist. Die beiden Doppelpfeile verdeutlichen in der schematischen Draufsicht der Fig. 3 die Bewegungsmöglichkeiten der beiden Querträger 56, d.h. ihren Schwenkbereich 62 um jeweils 90°.

Weitere optionale Funktionselemente sind in den Figuren 1, 4A und 4B erkennbar, nämlich ein optionaler mechanischer Anschlag 64, der am Rahmenträger 28 angeordnet sein kann, so dass der jeweilige Querträger 56 in seiner Ruhelage daran angelegt werden kann. Wahlweise kann es sich bei dem mechanischen Anschlag um eine magnetische Arretierung 66 handeln, so dass der Querträger 56 nach seinem Verschwenken in die Ruhelage (vgl. Fig. 4A) dort durch Magnetkraft gehalten wird. Eine solche magnetische Arretierung 66 hat den Vorteil, dass sie den Querträger 56 zuverlässig in seiner Ruhelage hält, dass die magnetische Haltekraft aber problemlos durch definierte Zugkraft beim manuellen Verschwenken in die Betriebslage (vgl. Fig. 3 und Fig. 4B) überwunden werden kann.

Außerdem kann ein optionaler Haltebügel 68 an der Unterseite des jeweils anderen Rahmenträgers 28 einen mechanischen Anschlag bilden, wenn der jeweilige Querträger 56 in seine Betriebslage verschwenkt wurde. Zwei solcher Haltebügel 68 sind in der perspektivischen Darstellung der Fig. 1 erkennbar. Der Haltebügel 68, der bspw. mit einer mechanischen Arretierung in Gestalt eines Zugknebels 70 ausgestattet sein kann, ist zudem in der perspektivischen Detailansicht der Fig. 4B erkennbar.

Jeder dieser Haltebügel 68, die bspw. eine L-förmige oder U-förmige Kontur aufweisen können, dient zur Aufnahme des Profils des in die Betriebslage verschwenkten Querträgers 56, so dass dieser nicht nur in seinem Schwenkgelenk an der schwenkbaren Aufhängung, sondern auch an der jeweils anderen Seite am gegenüberliegenden Rahmenträger 28 gehalten ist und den Querträger 56 abstützt, insbesondere wenn der Längsträger 54 darauf abgelegt werden soll (vgl. Fig. 3).

Soll der Querträger 56 aus der in Fig. 4B gezeigten verriegelten Betriebslage herausgeschwenkt werden, so kann der Zugknebel 70 senkrecht nach unten gezogen werden, vorzugsweise gegen die Rückstellkräfte einer Zugfeder, so dass der einseitig offene Haltebügel 68 den dort abgelegten Querträger 56 freigeben kann.

Wahlweise kann der Querträger 56 außerdem verschiebbar ausgebildet sein, so dass er bspw. in Richtung des Doppelpfeiles in Fig. 4B entlang seiner Längserstreckungsrichtung verschoben werden kann.

Schließlich kann jedem der beiden Querträger 56 jeweils ein Sensor 72 zugeordnet sein, der je nach Position des Querträgers 56 ein entsprechendes Ausgangssignal liefern kann. Vorzugsweise jedoch kann der Sensor 72 zumindest erkennen, ob der ihm zugeordnete Querträger 56 sich in der Ruhelage befindet oder nicht. D.h., er kann bspw. dann ein Ausgangssignal liefern, wenn der Querträger 56 aus seiner Ruhelage herausgeschwenkt ist.

Ein solcher Sensor 72 kann bspw. durch einen einfach aufgebauten magnetischen Sensor gebildet sein, der auf das ferromagnetische Material des Querträgers 56 ansprechen und sein Fehlen in unmittelbarer Nähe des Sensors 72 somit erkennen kann. Wahlweise kann der Sensor 72 auch durch einen optischen Sensor gebildet sein, der bspw. auf Lichtschrankentechnik basieren oder mit einer Hell-Dunkel-Sensorik arbeiten kann.

Mittels derartiger Sensoren 72, die jedem der beiden Querträger 56 zugeordnet sein können, kann bspw. bei einer beabsichtigten automatischen oder teilautomatischen Überführung der Transportstrecke 10 in den dritten Betriebsmodus M3 abgefragt werden, ob eine Kollisionsgefahr der abzusenkenden zweiten Horizontalfördereinrichtung 50 (vgl. Fig. 2D) mit dem Längsträger 54 und/oder mit den noch nicht in ihrer Ruhelage befindlichen beiden Querträgern 56 drohen könnte.

Eine solche Steuerungsmöglichkeit ist in Fig. 4A durch die dort eingezeichnete Steuerungseinrichtung S veranschaulicht, die insbesondere die Sensorsignale der beiden Sensoren 72 verarbeiten kann, um etwa den genannten automatischen oder Teilautomatischen Betrieb durchführen und steuern zu können. Darüber hinaus kann eine solche Steuerungseinrichtung S auch weitere Steuerungsaufgaben wahrnehmen, die im Zusammenhang mit dem Betrieb der Horizontalfördereinrichtung 12 (und/oder 50) der Transportstrecke 10 stehen können. Insbesondere kann eine solche Steuerungseinrichtung S auch Wechsel zwischen den beschriebenen Betriebsmodi M1, M2 und/oder M3 steuern.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Transportstrecke
- 12: Horizontalfördereinrichtung
- 14: Auflageebene
- 16: Stückgut
- 18: Förderrichtung
- 20: Auflagebereich
- 22: Zugmittel
- 24: Umlenkrolle, erste Umlenkrolle
- 26: Umlenkrolle, zweite Umlenkrolle
- 28: Rahmenträger, horizontaler Rahmenträger
- 30: Antriebsmotor
- 32: Gleitschiene
- 34: Schubfinger
- 36: Zugmittelpaar
- 38: Unterseite
- 40: randseitiger Bereich, randseitige Bereiche
- 42: mittlerer Bereich
- 44: Zwischenraum
- 46: Stützleiste
- 48: Gebinde, Foliengebinde
- 50: Horizontalfördereinrichtung, zusätzliche Horizontalfördereinrichtung, zweite Horizontalfördereinrichtung
- 52: Auflageebene, zweite Auflageebene
- 54: Längsträger
- 56: Querträger
- 58: Kontaktfläche, obere Kontaktfläche
- 60: Schwenkachse, vertikale Schwenkachse
- 62: Schwenkbereich
- 64: Anschlag, mechanischer Anschlag
- 66: Arretierung, magnetische Arretierung
- 68: Haltebügel
- 70: Zugknebel
- 72: Sensor
- M1: erster Betriebsmodus
- M2: zweiter Betriebsmodus
- M3: dritter Betriebsmodus
- S: Steuereinrichtung

## Patentansprüche

1. Transportstrecke (10) mit mindestens einer Horizontalfördereinrichtung (12), die für einen Transport von Stückgütern (12) oder Verpackungseinheiten eine sich in eine Förderrichtung (18) bewegende Auflageebene (14) zur Verfügung stellt, die durch mindestens zwei parallele und voneinander beabstandete Auflagebereiche (20) zur Abstützung und zur Beförderung der Stückgüter (16) oder Verpackungseinheiten gebildet ist,
wobei in einen Zwischenraum (44) zwischen den mindestens zwei parallelen und voneinander beabstandeten Auflagebereichen (20) mindestens eine lösbare Stützleiste (46) einsetzbar ist, die sich in etwa auf einem Höhenniveau der sich in Förderrichtung (18) bewegenden Auflageebene (14) befindet.

2. Transportstrecke (10) nach Anspruch 1, bei der die mindestens eine lösbare Stützleiste (46) durch einen starren Längsträger (54) gebildet ist, der auf Querträgern (56) abgelegt ist.

3. Transportstrecke (10) nach Anspruch 2, bei der die Querträger (56) beweglich gelagert sind, insbesondere klappbar oder verschwenkbar.

4. Transportstrecke (10) nach Anspruch 2 oder 3, bei der die Querträger (56) an Rahmenträgern (28) der Horizontalfördereinrichtung (12) schwenkbar gelagert sind, wobei sie insbesondere jeweils zwischen einer Ruhelage und einer Betriebslage verschwenkt werden können, wobei sie in der Betriebslage unterhalb der Auflageebene (20) und quer zur Förderrichtung (18) liegen.

5. Transportstrecke (10) nach einem der Ansprüche 1 bis 4, bei welcher der mindestens eine Längsträger (54), der die Stützleiste (46) bildet, durch einen Balken mit einer Gleitebene als oberer Kontaktfläche (58) zu den darauf gleitenden Stückgütern (16) gebildet ist.

6. Transportstrecke (10) nach einem der Ansprüche 1 bis 4, bei welcher der mindestens eine Längsträger (54), der die Stützleiste (46) bildet, durch einen Balken mit Wälzelementen zur Ausbildung einer Unterlage zum Darüberführen der Stückgüter (16) gebildet ist.

7. Transportstrecke (10) nach einem der Ansprüche 1 bis 6, bei welcher der Zwischenraum (44) zwischen den mindestens zwei parallelen und voneinander beabstandeten Auflagebereichen (20) bei entnommener Stützleiste (46) und insbesondere dabei eingeklappten Querträgern (56) in einem zweiten Betriebsmodus (M2) für einen Transport von andersartigen Stückgütern (16) oder Verpackungseinheiten mit einer zweiten sich in Förderrichtung (18) bewegenden Auflageebene (52) ausgestattet ist.

8. Verfahren zum Modifizieren einer Transportstrecke (10) mit mindestens einer Horizontalfördereinrichtung (12), die für wenigstens zwei unterschiedliche Betriebsmodi (M1, M2, M3) umgerüstet werden kann,
- wobei die Horizontalfördereinrichtung (12) in einem ersten Betriebsmodus (M1) für einen Transport von Stückgütern (16) oder Verpackungseinheiten einer ersten Größe oder eines ersten Typs eine sich in eine Förderrichtung (18) bewegende Auflageebene (14) zur Verfügung stellt, die durch mindestens zwei parallele und voneinander beabstandete Auflagebereiche (20) zur Abstützung und zur Beförderung der Stückgüter (16) oder Verpackungseinheiten der ersten Größe oder des ersten Typs gebildet ist, und
- wobei in den Zwischenraum (44) zwischen den mindestens zwei parallelen und voneinander beabstandeten Auflagebereichen (20) in einem zweiten Betriebsmodus (M2) der Horizontalfördereinrichtung (12) für einen Transport von Stückgütern (16) oder Verpackungseinheiten einer zweiten Größe oder eines zweiten Typs eine lösbare Stützleiste (46) eingesetzt ist, die sich in etwa auf einem Höhenniveau der sich in Förderrichtung (18) bewegenden Auflageebene (14) befindet.

9. Verfahren nach Anspruch 8, bei dem die mindestens eine lösbare Stützleiste (46) durch einen starren Längsträger (54) gebildet ist, der auf Querträgern (56) abgelegt werden kann.

10. Verfahren nach Anspruch 9, bei der die Querträger (56) an Rahmenträgern (28) der Horizontalfördereinrichtung (12) schwenkbar gelagert sind, wobei sie insbesondere jeweils zwischen einer Ruhelage und einer Betriebslage verschwenkt werden können, wobei sie in der Betriebslage unterhalb der Auflageebene (20) und quer zur Förderrichtung (18) liegen.

11. Verfahren nach einem der Ansprüche 8 bis 10, bei dem der Zwischenraum (44) zwischen den mindestens zwei parallelen und voneinander beabstandeten Auflagebereichen (20) bei entnommener Stützleiste (46) und insbesondere dabei eingeklappten Querträgern (56) in einem zweiten Betriebsmodus (M2) für einen Transport von andersartigen Stückgütern (16) oder Verpackungseinheiten mit einer zweiten sich in Förderrichtung (18) bewegenden Auflageebene (52) ausgestattet werden kann, wobei die durch die mindestens zwei parallelen und voneinander beabstandeten Auflagebereiche (20) gebildete Auflageebene (14) eine erste Auflageebene (14) bildet, und wobei die erste Auflageebene (14) und die zweite Auflageebene (52) eine erweiterte gemeinsame Auflageebene mit vergrößerter Auflagefläche bilden.

12. Verfahren nach Anspruch 11, bei dem im dritten Betriebsmodus (M3) der Horizontalfördereinrichtung (12) Stückgüter (16) oder Verpackungseinheiten einer dritten Größe oder eines dritten Typs in Förderrichtung (18) befördert werden können.

13. Verfahren nach Anspruch 11 oder 12, bei dem die zweite Auflageebene (52) durch eine zusätzliche Horizontalfördereinheit (50) zur Verfügung gestellt wird wird, die in einem Ruhezustand bzw. im ersten Betriebsmodus (M1) und im zweiten Betriebsmodus (M2) der Transportstrecke (10) in einem Bereich gelagert wird, der sich außerhalb des Förderbereiches für die Stückgüter (16) oder Verpackungseinheiten befindet

14. Nachrüstsatz für ein Verpackungsmodul, insbesondere für eine Transportstrecke (10) gemäß einem der Ansprüche 1 bis 7, welcher Nachrüstsatz zumindest die Querträger (56) sowie den die Stützleiste (46) bildenden und auf den verschwenkten Querträgern (56) ablegbaren Längsträger (54) umfasst.

15. Nachrüstsatz nach Anspruch 14, bei dem die Querträger (56) jeweils an Rahmenträgern (28) einer Horizontalfördereinrichtung (12) montierbar sind, welche einen Teil der Transportstrecke (10) gemäß einem der Ansprüche 1 bis 7 bildet.
